(19)

Europäisches
Patentamt
European
Patent Office
Office européen
des brevets

(11)  EP 3 731 554 A1

(12)  EUROPEAN PATENT APPLICATION

(43) Date of publication:
28.10.2020 Bulletin 2020/44

(51) Int Cl.:
H04W 16/02 (2009.01)       H04W 84/18 (2009.01)
H04W 92/18 (2009.01)       H04W 76/14 (2018.01)

(21) Application number: 19171460.9

(22) Date of filing: 26.04.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Fraunhofer Gesellschaft zur Förderung
der
angewandten Forschung e.V.
80686 München (DE)

(72) Inventors:
• Roth-Mandutz, Elke
  91058 ERLANGEN (DE)
• Shawky Hassan, Khaled
  91058 ERLANGEN (DE)
• Bhadauria, Shubhangi
  91058 ERLANGEN (DE)
• Leyh, Martin
  91058 ERLANGEN (DE)
• Mohammad Soleymani, Dariush
  91058 ERLANGEN (DE)
• Niemann, Bernhard
  91058 ERLANGEN (DE)

(74) Representative: Groth & Co. KB
P.O. Box 6107
102 32 Stockholm (SE)

Remarks:
Claims filed after the date of filing of the application
(Rule 68(4) EPC).

(54)  METHOD AND APPARATUS FOR ZONE ADAPTATION IN A NETWORK

(57)    The present disclosure relates to a method and a network node (700) for zone adaptation in a network. The network node (700) is configured to enhance an information element associated with configuration of zones by including at least a third dimension in addition to the two other dimensions, and to adapt the zone based on at least the speed of vehicles and the topology of highways, and to further adapt the length, width and height of a zone. The network node (700) may also configure zones for unicast, groupcast and broadcast communications, and to adapt the zones to fulfil QoS requirements.

Highway Scenario:
• 2 driving lines in each direction plus shoulder
• Seperate zones per driving direction
• Zones width covering all lines in one direction

Figure 1

## Description

## Technical Field

The present disclosure relates to the field of telecommunications and in particular to a method and a network node for zone adaptation in a network.

## Background

Sidelink in Long Term Evolution (LTE) is a feature first introduced in 3rd Generation Partnership Project (3GPP) Release 12 aiming at enabling device-to-device (D2D) communications within legacy cellular-based LTE radio access networks. Sidelink has been enriched in Releases 13 and 14 with various features. D2D is applicable to public safety and commercial communication use-cases, and to vehicle-to-everything (V2X) scenarios (Rel. 14 and Rel. 15). In legacy uplink/downlink, two UEs communicate through the Uu interface and data are always traversing the LTE radio base station (or eNB). Differently, sidelink enables the direct communication between proximal UEs using the defined PC5 (Proximity Communication 5) interface, and data does not need to go through the eNB. Services provided in this way are often called "Proximity Services" (or ProSe) and the UEs supporting this feature "ProSe"-enabled UEs.

For sidelink (SL) resource allocation within cells, in e.g. an LTE-based network, two-dimensional (2D) zones may be defined using the width and the length as described in 3GPP Technical Specification standard document 3GPP TS 36.331. A maximum of 16 2D geo-zones maybe set up. The zones are geometrically fixed which is that they are (quasi) static over time.

The concept with 16 geo-zones in LTE V2X (Vehicle-to-everything) based network is that it is too inflexible with respect to the requirements posed by sidelink in New Radio (NR) also known as 5G, especially regarding unicast, groupcast and broadcast.

For LTE V2X, only broadcast is supported. For example, groupcast (or platooning) may need an allocated resource pool (RP), which is defined along its track considering:

- the current position of the GL / complete platoon (a group of vehicles)
- the driving direction
- the speed
- the length of the platoon

Furthermore, LTE zones do not consider different services, Quality-of-Service (QoS), traffic type (sporadic, periodic) and related requirements.

For the zone concept in LTE, sidelink communication is broadcast-based with open-loop power control, which inherently is subject to the near-far problem, and consequently unbalanced receiving power at different vehicles.

Release14 introduced - to mitigate this undesired effect, i.e. the near-far problem- a geographical zone-based resource usage concept (geo-zoning).

Geo-zoning allows a group of vehicles located in one geo-zone (e.g., a segment of a road) and other vehicle groups in neighboring zones to use radio resources in a time-multiplexed manner, based on their GPS coordinates.

Geo-zones as well as the mapping between the geo-zones and sidelink/PC5 radio resource pools may be configured by a network node or a eNodeB (or eNB) or may be pre-configured for vehicles that are out of network coverage. A Vehicle determines the geo-zone identity based on the (pre-) configuration and its current location. The vehicle uses resource pools mapped to that particular zone

As mentioned earlier, For LTE V2X in Release 14/15, zones are defined, which are used for resource allocation. A maximum 16 2-dimensional geographical zones (*geo-zones*) may be defined, and only 2-dimensional: width/length is defined (see 3GPP TS 36.331 V 15.3.0, Release 15 (2018-10). In this standard document, an prior art information element (IE) is defined and denoted SL-ZoneConfig, which indicates zone configurations used for V2V sidelink communication.

*SL-ZoneConfig*

```
-   zoneLength-r14 ENUMERATED { m5, m10, m20, m50, m100, m200, m500,
    spare1},
-   zoneWidth-r14  ENUMERATED { m5, m10, m20, m50, m100, m200, m500,
    spare1},
-   zoneIdLongiMod-r14   INTEGER (1..4),
-   zoneIdLatiMod-r14 INTEGER (1..4)
```

where:

**zoneLength**
Indicates the length of each geographic zone. Value m5 corresponds to 5 meters, m10 corresponds to 10 meters and so on.
**zoneWidth**
Indicates the width of each geographic zone. Value m5 corresponds to 5 meters, m10 corresponds to 10 meters and so on.
**zoneIdLongiMod**
Indicates the total number of zones that is configured with respect to longitude.
**zoneIdLatiMod**
Indicates the total number of zones that is configured with respect to latitude.

Also mentioned earlier is that the 16 geo-zones in LTE V2X are not flexible enough for NR (or 5G) and possibly for future enhancements of LTE V2X, e.g. regarding unicast, multicast and broadcast, but also regarding highway scenarios and huge park houses. For example, currently the size of each zone is limited to a maximum of 500 meters, which might not be sufficient for fast driving cars on the highway.
Furthermore, LTE zones do not consider different services, QoS, traffic type (sporadic, periodic) and related requirements. Also the mobility in V2X should be considered, e.g. groupcast for groups moving into one direction.
There is therefore a need for at least one solution that overcomes at least the drawbacks presented above.

**Summary**

In view of the drawbacks disclosed earlier, there are provided a method and a network node (gNB or eNB) for zone adaption in a network wherein V2X is employed as will in the detailed description. Identical zones defined for LTE V2X, which may also apply for NR V2X zones. Another advantage is to provide new approaches to enhance the overall static LTE V2X zone concept, which apply for NR, but may also be used to enhance LTE. NR may use LTE zones as a baseline. Therefore, any ideas related to LTE defined zones may also apply for NR.
Also, the vehicle moving direction and speed may be considered for broadcast, groupcast and unicast, e.g. groupcast for groups moving into one direction.
A minimum communication range is a parameter newly introduced in release 16 for NR V2X to describe the minimum distance to be covered from the source vehicle to any destination vehicle, as described in the technical report 3GPP TR 23.786 V16.0.0, (Release 16) (2019-03). It is the distance within which a User Equipment (UE) shall perform an ultra-reliable, low latency transmission as per the requirements in [3GPP TS 23.287, 3GPP TR 22.886, and 3GPP TS 22.186].

**Brief Description of the Drawings**

The present disclosure will now be described, for exemplary purposes, in more detail by way of embodiment(s) and with reference to the enclosed drawings, in which:

Fig. 1   schematically illustrates a highway scenario wherein embodiments herein may be employed.
Fig. 2   schematically illustrates another highway scenario wherein embodiments herein may be employed.
Fig. 3   schematically illustrates a dynamic zone based on direction of motion.
Fig. 4   shows an example of overlapping inter-RAT zones.
Fig. 5   schematically depicts hybrid zones (overlapping) based on speed of vehicles.
Fig. 6   illustrates an example of a mapping between a validity area and multiple zones/cells/partial-cells.
Fig. 7   is a block diagram depicting a network node according to an exemplary embodiment.

**Detailed Description**

In the following, in several scenarios, a detailed description is presented of the exemplary embodiments in conjunction with the accompanying drawings to enable easier understanding of the solution(s) described herein.

According to an exemplary embodiment, a network node (gNB or eNB) is adapted to configure at least one zone by enhancing zone definitions considering the height as a third dimension in addition to the two existing defined zone dimensions, i.e. zone length and zone width. The embodiments herein may be applied or implemented for e.g. large parking areas e.g. multi-floor buildings or other areas

To achieve this, the network node is configured to enhance the information element (IE) SL-ZoneConfig, in accordance with an exemplary embodiment, such that the IE includes a third dimension: height e.g. used for parking garage, complex highway crossings, either absolute height or relative height e.g. floor levels. The network node is adapted/configured to signal the new IE to UEs and/or vehicles or platoons etc. Hence, a method performed by the network node includes configuring an IE SL-ZoneConfig to further include at least height related information and to signal said IE to UEs or vehicles in the network.

An example of the content of this IE is shown below, where bold features show the new enhancement compared to the prior art IE shown earlier:

*SL-ZoneConfig*

```
-    zoneLength-r1* ENUMERATED { m5, m10, m20, m50, m100, m200, m500,
     spare1},
-    zoneWidth-r1* ENUMERATED { m5, m10, m20, m50, m100, m200, m500,
     spare1},
-    zoneHeight-r1* ENUMERATED { m5, m10, m20, m50, m100, m200, m500,
     spare1}, (optional) // example, to be adapted
-    zoneIdLongiMod-r1*  INTEGER (1..4),
-    zoneIdLatiMod-r1* INTEGER (1..4)
-    ZoneIdHeightUnit-r1 (or zoneIdHeight)* INTEGER (1..4) (optional)//
     Example: "Height" could differ, the range 1..4 may be expanded to
     have individual heights for each floor
```

It should be noted that Release "-r1*" at the given SL-ZoneConfig may refer to any release e.g. Release 14, 15, 16, etc.

Bold colored features in the IE above indicate changes, in terms of field descriptions, compared to the original IE SL-ZoneConfig previously presented.

**zoneHeight**

Indicates the height of each geographic zone. Value m5 corresponds to 5 meters, m10 corresponds to 10 meters and so on.

**zoneIdHeightUnit or zoneIdHeight**

Provide an indication of the height in meters, - in case, it refers to levels. E.g., there could be levels with a height of 3 meters or in a parking garage - of 5 or even 10 meters.

It should be noted that Instead of height in meters, also the floor level might be used to differentiate between e.g. resource pools for different heights.

Due to the high speed of the vehicles on highways, but also due to the structure of the highway (mostly straight lines), the LTE V2X maximum zone length (currently defined for Release 15) of 500 m may not cover these highway specific characteristics. Therefore, according to an embodiment, the network node may configure the zone length of the IE to include an increased zone length.

Below is presented the IE SL-ZoneConfig according to yet another exemplary embodiment where the zone-length is enhanced with additional distances m1000, m2000, m5000, m10000,...,,,

*SL-ZoneConfig*

```
-   zoneLength-r1* ENUMERATED { m5, m10, m20, m50, m100, m200, m500,
    m1000, m2000, m5000, m10000, ,..., spare1},            // increase
    the size of the zone length considering the highway scenario and the
    speed of the vehicles
-   zoneWidth-r1* ENUMERATED { m5, m10, m20, m50, m100, m200, m500,
    spare1},
-   zoneHeight-r1* ENUMERATED { m5??, m10, m20, m50, m100, m200, m500,
    spare1},(optional) // to be adapted
-   zoneIdLongiMod-r1*  INTEGER (1..4),
-   zoneIdLatiMod-r1* INTEGER (1..4)
-   zoneIdHeightMod-r1* INTEGER (1..L) (optional)
```

where "L" in zoneIdHeightMod-r1*may refer to a number of possible vertical (height) layers. Bold features show the new enhancement compared to the IE shown earlier.

The number of layers may be fixed for pre-configurations or being adapted by the network node or the network and signaled (e.g., via Radio Resource Control (RRC) or higher layer signalling) based on e.g. the road complex topology (for example the number of stores, bridges, etc.)

In addition, also the "zoneWidth" may be extended in the same way as the the "zoneLength".

Again release "-r1*" at the given SL-ZoneConfig may refer to any release.

It should be mentioned that the current LTE zone concept seems to apply mostly for urban scenarios. However, vehicles on the highway are at least as important to be considered as especially autonomous driving and platooning focus - at least initially - on highways.

Therefore, the LTE / NR zone concept, according to an embodiment herein, is adapted, by the network node, considering the structure, lines, driving direction and speed on highways. Frequent resource allocation due to the limited zone size would be inefficient, as continuously new resources would need to be allocated to all vehicles. Also additional signal exchange would be required.

According to an embodiment, a network or a network node may:

• Configure different zones based on the driving direction on the highway

    ◦ i.e. at least two zones, one for each driving direction should be established
    ◦ separate zone or each lane

• The dimension of a zone may cover

    ◦ In one dimension (width): all lines in the same driving direction, e.g. 10 to 30 meters
    ◦ In the second dimension (length): strongly increased size compared to the max. 500 m for LTE zones, e.g. 1 to 50 or 100 km.
      ■ The length could cover one entire cell / sector or even continue over several cells.

The method performed by the network node thus includes: configuring different zones based on the driving direction on the highway i.e. at least two zones, one for each driving direction should be established.

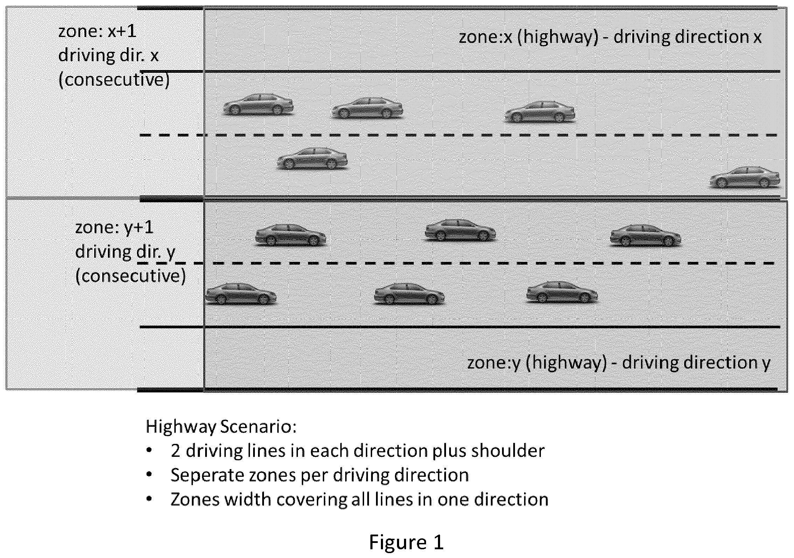

**Figure 1** illustrates an example of a highway scenario in which some embodiments herein may be employed. This scenario shows an example involving 2 driving lines in each direction plus shoulder; separate zones (x respectively y) per driving direction, and zone width covering all lines in one direction

According to an embodiment, the network or the network node may:

- Configure zones based on the entire width of the highway
- The dimension of a zone may cover

  ◦ In one dimension (width): all lines in both driving directions, e.g. 20 to 60 meters. The width could be increased depending on the environment
  ◦ In the second dimension (length): strongly increased size compared to the max. 500 m for LTE zones, e.g. 1 to 50 or 100 km.
  ▪ The length could cover one entire cell / sector or even continue over several cells.

Hence the method performed by the network node may include: configuring zones based on the entire width of the highway, wherein the dimension of a zone may cover, in one dimension (width): all lines in both driving direction, e.g. 20 to 60 meters, and in the second dimension (length): strongly increased size compared to the max. 500 m for LTE zones, e.g. 1 to 50 or 100 km.

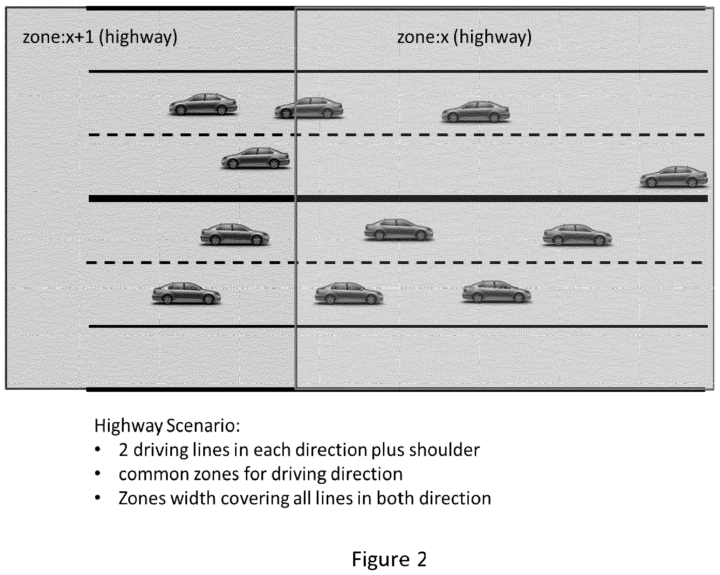

**Figure 2** illustrates such a scenario depicting a highway involving: two driving lines in each direction plus shoulder; common zones for driving direction, and zones width covering all lines in one direction The network or network node may configure (sub-) zones based on different velocity allowed in the different lanes of the highway.

According to another embodiment, the network node is configured to include in the IE SL-ZoneConfig flexible dimensions. This IE is presented below: (Note: Release "-r1*" at the given SL-ZoneConfig refers to any release as previously mentioned.

*SL-ZoneConfig*

```
-  zoneLength-r1* ENUMERATED { m5, m10, m20, m50, m100, m200, m500,
   mFlexibleLength, spare1},              // increase the size of the
   zone length considering the highway scenario and the speed of the
   vehicles
-  zoneWidth-r1* ENUMERATED { m5, m10, m20, m50, m100, m200, m500,
   mFlexibleWidth, spare1},
-  zoneHeight-r1* ENUMERATED { m5, m10, m20, m50, m100, m200, m500,
   mFlexibleHeight, spare1}, // to be adapted (optional)
-  zoneIdLongiMod-r1*  INTEGER (1..4),
-  zoneIdLatiMod-r1* INTEGER (1..4)
-  zoneIdMod-r1* INTEGER (1..L) (optional)
```

Wherein:

  **mFlexibleLength:** is a defined length as a function of:

  - Speed/direction only (for preconfigured cases) or
  - speed/direction and highway characteristics for connected/idle use cases, i.e., configured by the network or network node.

**mFlexibleWidth:** is a defined width as a function of:

- minimum communication range only (for preconfigured cases) or
- minimum communication range and the number of lanes for connected/idle use cases, i.e., configured by the network or network node.

**mFlexibleHeight:** is a defined height as a function of:

- maximum_hight_per_layer * maximum_no_Layer
- actual_hight_per_layer * actual_no_Layer (L).

Hence, the method performed by the network node may include: configuring the IE by including flexible dimensions are presented above.

Below are presented calculations for network-assisted cases, according to some embodiments herein:

**Calculations for network-assisted cases:**

mFlexibleLength = f( speed [m/s], highway_length[m]) [m],

$$mFlexibleWidth = max(min\_communication\_range\ [m],\ Number\_Lanes*Lane\_Width\ [m])\quad [m],$$

$$mFlexibleHeight = number(L\text{-}layers)*Layer\_Hight\ [m]$$

**Road topology** may be conveyed by the network or network node or upper-layers for connected/idle scenarios. In this case, the road topology may include:

- Road maximum spanning/length, e.g., Extra-Long, Long, moderate, country roads, .... These values may be interpreted as integers from 1 to N, where N is the maximum length and 1 is the shortest road.
- Road width, which may include the number of lanes, e.g., as an integer from 1 to M, where M is the maximum number of lanes
- Road height topology, e.g., including the actual number of layers from 1 to L, where L is the maximum number of layers vertically and 1 is, again, 2D case. Additionally, the height of the layers in meters.
- Below is described, flexible resource allocation involving a zone concept that may be applied in NR or 5G. However, this concept may also be applied for LTE V2X zones.
- Use case specific may be defined. Also flexible zones/resource pools may be defined, which could differentiate between geographical areas, e.g. highways, urban, suburban.
- In addition, for the different use cases, different zone concepts may apply, considering e.g.
- high mobility and groupcast (e.g. platooning).
- Also the communication type, the QoS and the minimum communication range could be considered to design the resource pools for NR.
- Note: Any NR specific enhancements for zones / resource pools may also apply for LTE V2X zones.

Dynamic zones may be beneficial to avoid continuous allocation of new resources/resources pools. This may be the case for vehicles moving in the same direction in groups.

The dynamic zones should not be limited to static geographic zones, but move with the vehicle/group of vehicles. Fixed geographical zones, as originally defined for LTE, demand additional signalling exchange with an additional risk not to get the required resources at all or in time.

Therefore, according to an embodiment herein, a dynamic zone moving along with the associated vehicle(s) may be provided. A platoon is an example setup with a pre-defined number of trucks moving in line in the same direction, typically using the same lane.

The defined zone (using the parameters given in LTE) adapted its origin based on the speed of vehicle(s).

The dynamic zone according to an embodiment may be defined by:

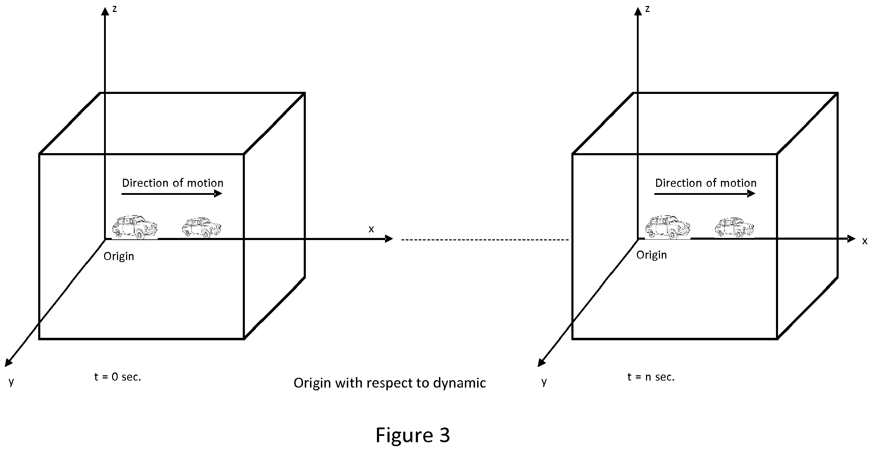

• The origin of the zone defined as shown in **Figure 3**

    ◦ The velocity of the associated vehicle(s)

◦ The direction of motion (optional)
◦ the length/size of the vehicle(s), e.g. the platoon (optional)
▪ the zone may be resizable, i.e. the size of the zone is dynamic and may be adapted e.g. according to the size of a platoon.

Vehicles moving on groups could be either:

• Predefined groups, e.g. groupcast for platooning
• Ad-hoc groups, e.g. vehicles moving in the same direction with similar speed, e.g. on the highway, especially for (partial) autonomously driving cars / trucks.

For groupcast (controlled/ad hoc groups), the entire length of the group could be known. The allocated zone may therefore use the zone size fitting to the length of the group.
A group may include a single vehicle or 2 or more vehicles using unicast communication.
At least as long as the dynamic zone is contained within the validity area (as will be described) it can be assumed, that the same resources can be used.
According to an embodiment, LTE and NR (or 5G) zones may be combined and may overlap. As an example, one LTE zone could be split into several NR zones and vice versa, e.g. inter-RAT (Radio Access Technology) co-existence.
For overlapping zones, several zones may completely or partially overlap. This could be the case for:

• LTE zones with LTE zones

• NR zones with NR zones

• NR zones with LTE zones

• OEM (Original Equipment Manufacture) specific zones with any other type of zone

• Any other specific zones related to speed, QoS, etc.

OEM specific zones, refers to e.g. a vehicle vendor, which may request for zones just for their vehicles, e.g. for collecting vehicle measurements or distributing software. As an example, a zone may be associated with a network slice (typically higher layer) which may support one specific service or multiple services. A zone/type of zone (physical layer for V2V or V2X direct communication may also support one or multiple services). Therefore, a higher layer network slice could be mapped to one or multiple zones or a specific type of zone. The embodiments herein are thus not restricted to physical network zones, but may also be implemented in a network employing network slices.
It should be mentioned that network slicing allows a network operator to provide dedicated virtual networks with functionality specific to the service or customer over a common network infrastructure. Thus it will be able to support the numerous and varied services envisaged in 5G. Associating a zone to a network slice, according to some embodiments herein, allows the allocation of resources and the provisions of resources in vehicles within a zone.

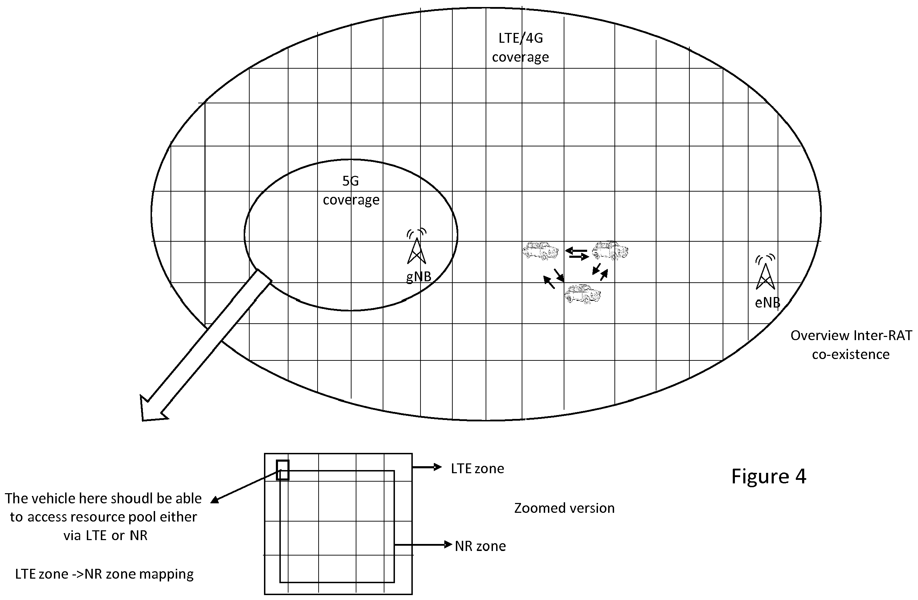

**Figure 4** depicts an example of overlapping inter-RAT zones i.e. LTE (or 4G) zones and NR (5G) zones.
According to an embodiment, the network node may configure at least one zone for specific conditions, requirements, etc., such as e.g. data traffic, QoS settings, and speed.
Hence, hybrid zone sizes may be considered in one cell or one validity area.
Therefore, zones might be overlapping (coinciding or non-coinciding).
Different zones might have same coordinate orientation (i.e., starts from the same 0,0 position) or might have different orientation (i.e., every zone starts with different x,y coordinate)
The number of zones for every case/requirement might be the same (e.g., 16, 32, 64, etc.) or different, e.g., wide-spanning cases may have less zones than high dense cases.
The cases and requirements could be:

**Traffic conditions, i.e., overlapping, but different zones for different traffic type, e.g.:**

• Zones for periodic traffic
• Zones for aperiodic / sporadic traffic

**Communication type**

- For unicast, groupcast and broadcast, specific zones could be configured. E.g., broadcast zones, can be wider/larger than groupcast and unicast

**Speed**

Depending on the speed, different zones could be configured, e.g. for pedestrians, bikes, slow vehicles, and fast vehicles. E.g., fast vehicles may require wider zones (see Figure 1)

**QoS**

The QoS may be derived from the 5QI (5G QoS Identifier), PQI (Performance Quality Improvement), etc.
Besides 5QI or PQI or VQI specific zones, QoS may also distinguish regarding reliability/latency /priority, etc.

- Zones to be defined per QoS requirements, e.g.

  ∘ URLLC (Ultra Reliable Low-Latency Communication) zones or only "latency or reliability" → Size 1
  ∘ High capacity (eMBB (enhanced Mobile BroadBand)) zones → Size 2

For example, zone Size 1 may be smaller than Zone Size 2
According to an embodiment, smaller zones may be limited to less allowed power. However, wider zones may use higher power values.
According to another embodiment, smaller zones may be associated to smaller number of pools. However, wider zones may use higher number of resource pools.

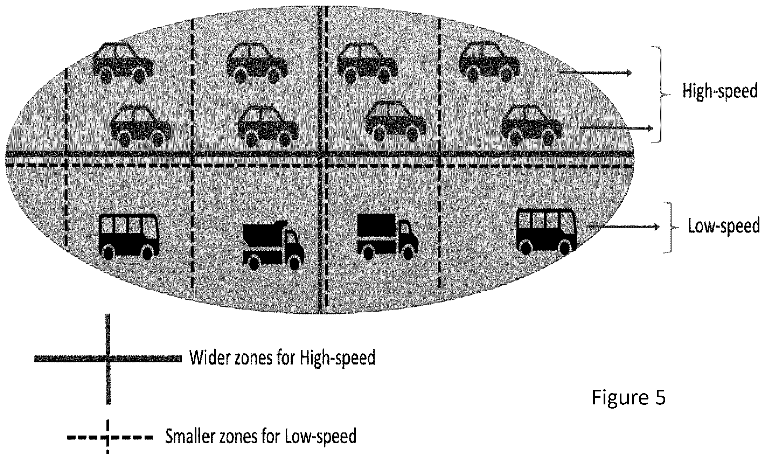

**Figure 5** illustrates an example of hybrid zones which are overlapping based on speed. High-speed vehicles and low-speed vehicles are exemplified. The zones are also shown.
As previously described, a minimum communication range is a parameter newly introduced in release 16 for NR V2X to describe the minimum distance to be covered from the source vehicle to any destination vehicle.
According to an embodiment, the network node may be configured to adapt a zone size using reduced zone size based on the minimum communication range. Hence, the method in the network node may include adapting a zone size based on the minimum communication range.
In other words, depending on the setting of the minimum communication range the size of the zone could be adapted.
For example, vehicles may only communicate with other vehicles within a certain relative distance e.g. for specific use cases, such as extended sensor sharing.
This concept may also consider the Time-Frequency Resource Pattern (TFRP) i.e. resource patterns defined by time and frequency.
Major advantages of the adaptive moving zones with restricted size are:

- Less interference

- Efficient resource reuse: resources can be reused more frequently

It should be mentioned that, in the state of the art, the network may provide pools of resources in which UE autonomously selects sidelink grant for 'sidelink unicast/groupcast/broadcast' via broadcast system information and/or dedicated signalling;-Mode 2 resource configuration can be provided for a given validity area where the UE(s) does not need to acquire a new mode-2 resource configuration while moving in the validity area, as least when this configuration is provided by SIB (e.g. to reuse valid area of NR SIB (System Information Block));"
"3GPP (Radio Access Network) RAN2 supports mode-2 resource configuration for a given validity area where the UE(s) does not need to acquire a new mode-2 resource configuration while moving in the validity area, as least when this configuration is provided by SIB (e.g. to reuse valid area of NR SIB)."
According to some embodiments herein, the definition of the validity area is enhanced. A network node (e.g. a radio base station) may be configured to define a validity area for a specific UE using dedicated messages conveying the validity area information element for the UE. The base station or the network node may also be configured to broadcast the validity area for more UEs using broadcast signaling conveying the validity area information element for all UEs.

According to an embodiment, the UE may be adapted to perform the following:

○ If a comm_validity_area_specific message is received on a dedicated RRC message, the UE is configured to read the comm_validity_area_info from the received file.

○ If the UE didn't receive a comm_validity_area_specific message on the dedicated RRC message, the UE is configured to scan the V2X SIBs for a comm_validity_area_common. If the latter is received, the UE is configured to decode the comm_validity_area_info for the validity information. The comm_validity_area_common message may comprise, e.g.:

- comm_validity_area_info

  - validity cells
  - validity beams
  - validity zones
  - validity regions (may comprise partial cells/sectors/beams)
  - validity height information
  - validity power information
  - validity time information
  - validity communication range

- validity carrier information
- validity regulatory and barring information
- validity UE capability and permissions

○ The comm_validity_area_specific message may comprise, e.g.:

- comm_validity_area_info

  - validity cells
  - validity beams
  - validity zones
  - validity regions (may comprise partial cells/sectors/beams)
  - validity height information
  - validity power information
  - validity time information
  - validity communication range
  - if needed: validity carrier information
  - if needed: validity regulatory and barring information
  - if needed: validity UE capability and permissions

A validity area information element may be pre-configured by a network node (e.g. of a vendor) and/or slightly updated by the network or network node using the V2X SL_Preconfiguration. Hence, if the UE is out of coverage or the UE does not receive the right V2X SIBs, the UE may use the SL_Preconfiguration to read the SL_Preconfiguration_validity_preconfig. This comprises:

○ SL_ Preconfiguration_validity_preconfig_

- Validity region per-country information
- validity zones
- validity height information
- validity power information
- validity time information
- validity communication range
- validity carrier information dedicated SL carriers
- validity regulatory and barring information on the dedicated SL carriers
- if needed: validity UE capability and permissions

According to an embodiment, a validity area may be defined by the network node in two ways regarding zones and cells:

1st A Validity Area comprises multiple zones/cells:

- Hence, a validity area may be split into cells (or partial cells) where cells may have zones. A validity area may also be divided into multiple zones, where the UE is configured to receive from all resources in the validity area while transmitting only on the resources dedicated for the zone where the UE is located. In this case, the UE does not have to change the grants due to, e.g., leaving one cell to another cell or one zone (within the validity area) to another zone.

2nd A validity Area may comprise one Zone and or one Cell

- In this case, one validity area may be configured with all possible resource pools assuming a validity area is one zone in one cell. In this case, the UE does not have to change the grants within such an area (i.e., which comprises one zone).

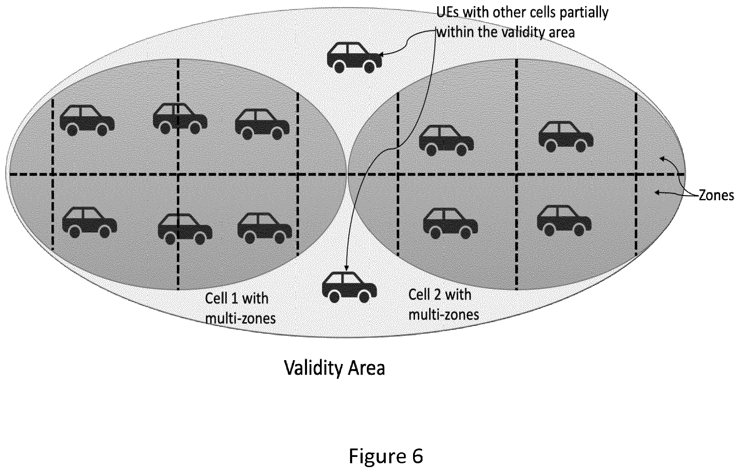

According to an exemplary embodiment, a validity area has one zone and/or the validity area has multiple zones/cells as previously described. All the previous embodiments for zones are valid in both cases. **Figure 6** depicts a example of a mapping between a validity area and multiple zones/cells/partial-cells.

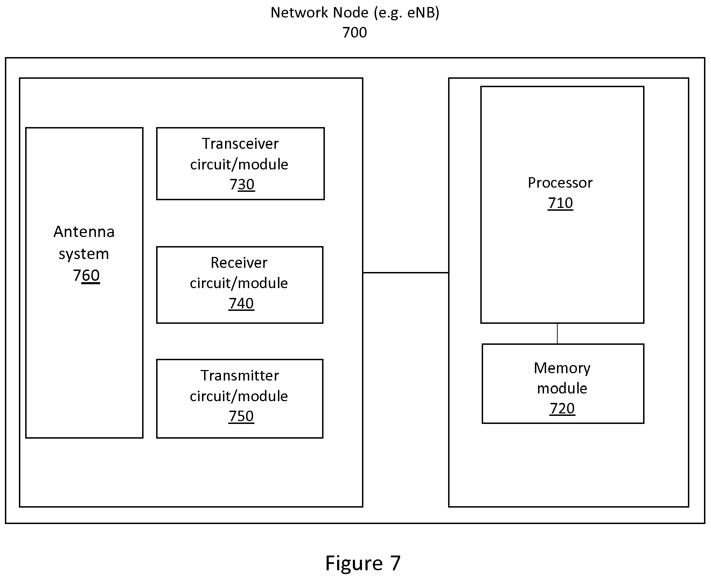

As previously described the exemplary embodiments herein may be performed by a network node (or eNB or gNB). In order to perform the previously described process or method steps related to the network node. the network node 700 includes, as shown in **Figure 7,** a processor 710 or processing circuit or a processing module or a processor or means; a receiver circuit 740 or receiver module; a transmitter circuit 750 or transmitter module; a memory module 720 a transceiver circuit 730 or transceiver module which may include the transmitter circuit and the receiver circuit. The network node 700 may further comprise an antenna system 760 which includes antenna circuitry for transmitting and receiving signals to/from in the network topology Detailed performed by the network node have already been described and need not be repeated.

There is also provided a computer program comprising instructions which when executed on at least one processor of the network node, cause the at least said one processor to carry out the method or procedure previously described.

The network node may belong to any radio access technology including 3G, 4G or LTE, LTE-A, 5G, WLAN, and WiMax etc.

The processing module/circuit includes a processor, microprocessor, an application specific integrated circuit (ASIC), field programmable gate array (FPGA), or the like, and may be referred to as the "processor." The processor of the network node controls the operation of the node and its components. Memory (circuit or module) includes a random access memory (RAM), a read only memory (ROM), and/or another type of memory to store data and instructions that may be used by processor. In general, it will be understood that the network node may include fixed or programmed circuitry that is configured to carry out the operations in any of the embodiments disclosed herein. Further, it will be appreciated that the network node may comprise additional components.

As demonstrated, many advantages are achieved which enhancements of the geographical zones defined for LTE V2X, which may also apply for NR V2X zones. Another advantage is to provide new approaches to enhance the overall static LTE V2X zone concept, which apply for NR, but may also be used to enhance LTE. NR may use LTE zones as a baseline. Therefore, any ideas related to LTE defined zones may also apply for NR. Other advantages achieved include less interference and efficient resource reuse.

Throughout this disclosure, the word "comprise" or "comprising" has been used in a non-limiting sense, i.e. meaning "consist at least of". Although specific terms may be employed herein, they are used in a generic and descriptive sense only and not for purposes of limitation. The embodiments herein may be applied in any wireless systems including 3G or WCDMA, LTE or 4G, LTE-A (or LTE-Advanced), 5G, WiMAX, WiFi, satellite communications, TV broadcasting etc.

**Claims**

**1.** A method performed by a network node for the adaptation of the limited configuration of the zones used for resource allocation for sidelink(s) when signaled or preconfigured to at least one User Equipment (UE), the method comprising enhancing to the configuration of said zone by adapting its spatial dimension based on, e.g., traffic conditions, driving speed, road topology and QoS requirements.

**2.** The method according to claim 1, wherein the length and/or the width of a zone is increased on a road e.g. based on the type and/or structure of the road or the driving speed.

**3.** The method according to claim 1 or 2, wherein the width of said zone cover at least both driving directions on said road.

**4.** The method according to claim 1 or 2, comprising the configuration of at least one zone for each driving direction on said road.

**5.** The method according to claim 4, wherein the width of said zone cover at least all lanes in the same driving direction on said road.

**6.** The method according to claim 4 or 5, wherein the width of said zone cover at least one lane on said road, where different lanes in the same driving direction are covered by different zones.

**7.** The method according to any preceding claim, where length and the width of the zone are flexible and defined as a function of the driving speed and direction.

**8.** The method according to any preceding claim, wherein height is represented as a third dimension in addition length and width, and wherein height availability or limitations are represented by said third dimension.

**9.** The method according to claim 8, wherein the height is expressed in absolute height, such as in meters, or in relative height, such as in floor plans.

**10.** The method according to claim 8 or 9, wherein said third dimension is used in parking areas, multi-floor buildings or complex highway crossings.

**11.** The method according to any one of claims 8 to 10, wherein height may be pre-configured or adapted by the network and signaled, e.g. via RRC.

**12.** A method performed by a network node for the adaptation of the limited configuration of the zones used for resource allocation of sidelink(s) when signaled or preconfigured to at least one User Equipment (UE), the method comprising enhancing the configuration of said zone(s) or resource pools by adding or modifying an information element, wherein said zone is a dynamic zone adapted to move with a group consisting of at least one UE.

**13.** The method according to claim 12, wherein a group of UEs is an Ad-hoc group.

**14.** The method according to claim 12, wherein a group of UEs is a predefined group.

**15.** The method according to claim 12, 13 or 14, wherein the length of the group is known, and the zone length is adapted to fit to the length of the group.

**16.** The method according to claim 15, wherein the length of the group is adapted to the distance between the first and last UE in the group, and the zone length is resizable and adapted to the number of UEs in the group changes.

**17.** The method according to any one of claims 13 to 16, wherein groupcast/multicast and/or broadcast and/or unicast is used for said group.

**18.** The method according to any one of claims 12 to 17, wherein said information element comprises additional parameters, such as group length, group position, number of UEs in the group, group speed, and group driving direction.

**19.** The method according to any one of claims 12 to 18, wherein a zone is associated with a network slice for providing a least one virtual network.

**20.** The method according to any one of claims 12 to 19, comprising defining a validity area for at least one UE using at least one message conveying a validity area information element to the at the at least one UE.

**21.** The method according to claim 20 wherein the validity area comprises multiple zones or a single zone.

**22.** The method according to claim 20 or 21, wherein the allocated resources maintain with the group at least as long as the dynamic zone is contained within the validity area.

**23.** The method according to any one of claims 12 to 22, comprising configuring the zone based on traffic conditions, such as periodic or sporadic traffic, and allowed speed.

**24.** The method according to any one of claims 12 to 23, comprising configuring the zone based on cast type, such as zones for broadcast can be larger than zones for groupcast or unicast.

**25.** The method according to any one of claims 12 to 24, comprising configuring the zone based on Quality of Service requirements, such as High capacity zones, or enhanced Mobile BroadBand zones that can be larger than Ultra Reliable Low-Latency Communication zones or only "latency or reliability" zones.

**26.** The method according to any one of claims 12 to 25, wherein smaller zones are limited to less allowed power, and larger zones are allowed to use higher power values.

**27.** The method according to any one of claims 12 to 26, wherein smaller zones use to a smaller number of resource pools, and larger zones use higher number of resource pools.

**28.** The method of any one of claims 12 to 27, the zone size is adapted to a minimum communication range.

**29.** The method of claim 28, wherein UEs within said zone is only allowed to communicate with other UEs within a certain relative distance e.g. for specific use cases, such as extended sensor sharing.

**30.** The method according to claim 28 or 29, wherein the Time-Frequency Resource Pattern (TFRP) is used.

**32.** The method according to any preceding claim, wherein a zone may overlap with other zones from the same or a different radio access technology.

**33.** The method according to any preceding claim, wherein zones are configured for defined conditions and or requirements, which comprises but are not limited to:

- Traffic conditions, e.g. periodic, aperiodic traffic
- Communication type, e.g. specific zones for unicast, groupcast and broadcast
- Speed, e.g. specific zones for pedestrians, bikes, slow vehicles, and fast vehicles
- QoS, e.g. based on QoS metrics such as 5QI, PQI or VQI or based on individual QoS requirements e.g. reliability, latency, priority.

**34.** The method according to claim 33 wherein overlapping zones are configured for any of the defined conditions.

**35.** A method according to any preceding claim, wherein at least one UE is a vehicle.

**36.** A method according to any preceding claim, wherein the information element is a side link zone configuration, SL-ZoneConfig, used for V2V sidelink communication.

**37.** A network node comprising a processor, a memory and a transmitter circuit, said memory containing instructions executable by said processor whereby the network node is operative to perform any of the subject-matter of claims 1 to 36.

Highway Scenario:
- 2 driving lines in each direction plus shoulder
- Seperate zones per driving direction
- Zones width covering all lines in one direction

Figure 1

zone:x+1 (highway)    zone:x (highway)

Highway Scenario:
- 2 driving lines in each direction plus shoulder
- common zones for driving direction
- Zones width covering all lines in both direction

Figure 2

EP 3 731 554 A1

EP 3 731 554 A1

Direction of motion

Origin

t = 0 sec.

Origin with respect to dynamic

Direction of motion

Origin

t = n sec.

Figure 3

LTE/4G coverage

5G coverage

eNB

gNB

Overview Inter-RAT co-existence

Figure 4

Zoomed version

LTE zone

NR zone

The vehicle here shoudl be able to access resource pool either via LTE or NR

LTE zone ->NR zone mapping

Figure 5

Figure 6

Network Node (e.g. eNB)
700

Processor
710

Memory
module
720

Transceiver
circuit/module
730

Receiver
circuit/module
740

Transmitter
circuit/module
750

Antenna
system
760

Figure 7

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 19 17 1460

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "3GPP TSG-RAN WG2 Meeting 103bis Source: Hyundai Motors Title: Discussion on NR zone design for sidelink resource allocation considering vehicle speed", , 12 October 2018 (2018-10-12), pages 1-2, XP055653875, Retrieved from the Internet: URL:https://www.3gpp.org/ftp/tsg_ran/WG2_R L2/TSGR2_103bis/Docs/R2-1814276.zip [retrieved on 2019-12-18] * the whole document * ----- -/-- | 1-11, 31-36 | INV. H04W16/02 ADD. H04W84/18 H04W92/18 H04W76/14 |

TECHNICAL FIELDS
SEARCHED      (IPC)

H04W

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Berlin | 18 December 2019 | Nocentini, Ilario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

page 1 of 2

Europäisches
Patentamt

European
Patent Office

Office européen
des brevets

**PARTIAL EUROPEAN SEARCH REPORT**

Application Number

EP 19 17 1460

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| X | ITRI: "Zone-based resource management in V2X service", 3GPP DRAFT; R1-160667, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160218 14 February 2016 (2016-02-14), XP051053995, Retrieved from the Internet: URL:http://www.3gpp.org/ftp/Meetings_3GPP_SYNC/RAN1/Docs/ [retrieved on 2016-02-14] | 1 | |
| A | * the whole document * | 2-11, 31-36 | **TECHNICAL FIELDS SEARCHED (IPC)** |
| | ----- | | |
| A | US 2019/104512 A1 (VURA PRAVALLIKA [IN] ET AL) 4 April 2019 (2019-04-04) * paragraph [0055] - paragraph [0069] * | 1-11, 31-36 | |
| | ----- | | |
| A | US 2018/124771 A1 (MOK YOUNGJOONG [KR] ET AL) 3 May 2018 (2018-05-03) * paragraph [0248] - paragraph [0263] * | 1-11, 31-36 | |
| | ----- | | |

EPO FORM 1503 03.82 (P04C10)

Europäisches
Patentamt

European
Patent Office

Office européen
des brevets

**INCOMPLETE SEARCH
SHEET C**

Application Number

EP 19 17 1460

Claim(s) completely searchable:
        -

Claim(s) searched incompletely:
        1-11, 31-36

Claim(s) not searched:
        12-30

Reason for the limitation of the search:

1.1        The search division sent, on 15.10.2019, an invitation
pursuant to Rule 62a(1) EPC.
1.1.1        In the reply received on 13-12-2009 the applicant did not
provide any argument in support of the compliance of independent claims 1
and 12 with the requirements of Rule 43(2). The applicant merely proposed
to redraft claims 1 and 12 as two different alternatives (using the
preposition "or") of a new claim 1. Anyway this would still lead to two
separate independent claims, though cosmetically redrafted as a single
independent claims, for which the compliance of Rule 43(2) must be
assessed. As the applicant did not provide any argument in support to
said compliance, the searched was restricted to the first claim in each
category.
1.2        The search division sent, on 15.10.2019, an invitation
pursuant tu Rule 63(1) EPC.
1.2.1        In the reply received on 13-12-2009 the applicant filed a
statement indicating the subject-matter to be searched by suggesting to
to change the expression "e.g." in "at least one of the following". The
search division considers that said statement overcome the deficiency
noted in cited invitation.
1.3        Therefore, as a consequence of what stated in points 1.1 and
1.2 above the search division restricts the search to the following
subject matter:
1.3.1        Claim 1, modified as indicated by the applicant (see point
1.3.1  above), that therefore reads:
"A method performed by a network node for the adaptation of the limited
configuration of the zones used for resource allocation for sidelink(s)
when signaled or preconfigured to at least one User Equipment (UE), the
method comprising enhancing to the configuration of said zone(s), the
method comprising adapting its spatial dimension based on at least one of
the following conditions: traffic conditions, driving speed, road
topology and QoS requirements."
1.1.1        Dependent claim 2, modified in line with point  1.3.1  above,
reading:
"The method according to claim 1, wherein the length and/or the width of
a zone is increased on a road based on the type and/or structure of the
road or the driving speed".
1.1.1        Dependent claims 3-11 and 31-36. Please note that claims are
renumbered due to claim 31 missing.

## ANNEX TO THE EUROPEAN SEARCH REPORT
## ON EUROPEAN PATENT APPLICATION NO.

EP 19 17 1460

This annex lists the patent family members relating to the patent documents cited in  the above-mentioned European search report.
The members are as contained in the European Patent Office EDP file on
The European Patent Office is in no way liable for these particulars which are merely given for the purpose of information.

18-12-2019

| Patent document cited in search report | | Publication date | Patent family member(s) | | Publication date |
|---|---|---|---|---|---|
| US 2019104512 | A1 | 04-04-2019 | NONE | | |
| US 2018124771 | A1 | 03-05-2018 | CN | 109891936 A | 14-06-2019 |
| | | | EP | 3513595 A1 | 24-07-2019 |
| | | | KR | 20180049803 A | 11-05-2018 |
| | | | US | 2018124771 A1 | 03-05-2018 |
| | | | US | 2019174482 A1 | 06-06-2019 |
| | | | WO | 2018084599 A1 | 11-05-2018 |

EPO FORM P0459

For more details about this annex : see Official Journal of the European Patent Office, No. 12/82

**EP 3 731 554 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *3GPP TS 36.331 V 15.3.0,* October 2018
- *3GPP TR 23.786 V16.0.0,* March 2019